# EUROPÄISCHE PATENTANMELDUNG

(11) **EP 0 899 163 A1**
(43) Veröffentlichungstag der Anmeldung: **03.03.1999**
(21) Anmeldenummer: 98112710.3
(22) Anmeldetag: 09.07.1998
(51) Int. Cl.: B60R 13/02, B60R 21/04

(54) **Säulenverkleidung im Innenraum eines Kraftfahrzeugs**

(30) Priorität: 29.08.1997 DE 19737743
(71) Anmelder: Volkswagen Aktiengesellschaft, 38436 Wolfsburg (DE)
(72) Erfinder: Morsch, Klaus-Dieter, 38124 Braunschweig (DE)

(57) **Zusammenfassung**

Die Erfindung betrifft eine Säulenverkleidung (10) im Innenraum (13) eines Kraftfahrzeugs (1) mit einem Verkleidungsteil (11), das eine ortsfeste Säule (2) zumindest teilweise umschließt. Erfindungsgemäß ist wenigstens ein Bereich des Verkleidungsteils (11), der in Normalstellung (21) einen Ausstieg eines Insassen behindern kann, gegenüber der ortsfesten Säule (2) beweglich und aus dem Behinderungsbereich in eine Ausstiegstellung (22) wegverlagerbar.

## Beschreibung

Die Erfindung betrifft eine Säulenverkleidung im Innenraum eines Kraftfahrzeugs nach dem Oberbegriff des Anspruchs 1.

Allgemein bekannte Fahrzeugkarosserien enthalten ortsfeste Säulen, die im Fahrzeuginnenraum durch Verkleidungsteile abgedeckt sind. Diese Verkleidungsteile sind einerseits Gestaltungselemente für eine ansprechende Optik und haben regelmäßig auch Sicherheitsfunktionen als energieabsorbierende, weiche Deformationselemente.

Solche verkleidete Säulen begrenzen Ein- und Ausstiegöffnungen eines Fahrzeugs, wobei insbesondere bei kleindimensionierten Kompaktfahrzeugen Verkleidungsteile an Säulen einen Ausstieg eines Insassen behindern können. Insbesondere kann dies durch eine hintere Verkleidungsteilkante an einer B-Säule in einem Fußdurchtrittsbereich der Fall sein, wobei eine bequeme Fußausstiegsbewegung behindert sein kann. Wenn eine solche Verkleidungsteilkante weiter nach vorne versetzt wird, kann mehr Freiraum für einen Fußausstieg geschaffen werden. Jedoch ergeben sich dann optisch ungünstige, relativ breite Innenraumspalte zwischen dem Verkleidungsteil und einer angrenzenden Türverkleidung.

Es sind weiter Dichtungsanordnungen zum Abdichten von Fugen zwischen bewegbaren Karosserieteilen und zugehörigen Karosserieöffnungen bekannt (DE 37 29 179 A1; DE 41 37 296 A1; DE 34 10 742 A1), bei der schlauchförmige, flexible Hohlprofile als Dichtungen verwendet werden, deren Querschnittsgröße und/oder Querschnittsform durch Beaufschlagung des Hohlraums der Dichtung mit Überdruck oder Unterdruck geändert werden kann. Dadurch ergibt sich zwischen den bewegbaren Karosserieteilen, insbesondere von Fahrzeugtüren und den zugehörigen Karosserieöffnungen eine ständig unter Spannung stehende gute Abdichtung. Solche Dichtungen sind insgesamt relativ kleinvolumig und liegen zudem an Stellen, insbesondere an Falzen, wo sie einen Ausstieg eines Insassen nicht behindern können.

Weiter ist ein Kantenschutz für eine Kraftfahrzeugtür bekannt (DE 35 23 991 A1), der hinter der Türkante im Zwischenraum zwischen der Tür und einem Türausschnitt der Karosserie angeordnet ist und von dort beim Öffnen oder Schließen der Tür selbsttätig in eine Funktionsstellung vorschiebbar bzw. zurückziehbar ist. Ein solcher Kantenschutz, der mit der Fahrzeugtür mitbewegt wird, kann einen Ausstieg eines Insassen nicht behindern.

Aufgabe der Erfindung ist es, eine Säulenverkleidung im Innenraum eines Kraftfahrzeugs zu schaffen, mit der eine mögliche Behinderung des Ausstiegs eines Insassen reduziert wird.

Diese Aufgabe wird mit den Merkmalen des Anspruchs 1 gelöst.

Gemäß Anspruch 1 ist wenigstens ein Bereich des Verkleidungsteils von dem eine Ausstiegsbehinderung für einen Insassen ausgehen kann, gegenüber der ortsfesten Säule beweglich gehalten und von einer Normalstellung beim Betrieb des Fahrzeugs aus dem Behinderungsbereich in eine Ausstiegstellung wegverlagerbar.

Durch eine solche bewegliche und wegverlagerbare Säulenverkleidung kann diese mit gestalterischen und konstruktiven Freiräumen dimensioniert werden. Insbesondere sind dabei spaltfreie Anschlüsse an weitere angrenzende Verkleidungsteile beispielsweise an Türverkleidungsteile möglich. Zudem ist in der Normalstellung eine großvolumige Dimensionierung der Säulenverkleidung möglich, was bei einer energieabsorbierenden Ausführung vorteilhaft sein kann.

Im Falle eines Ein- oder Ausstiegs eines Insassen ist dann das Verkleidungsteil oder wenigstens ein Bereich davon aus einem Behinderungsbereich in eine Ausstiegstellung ohne Behinderung wegverlagerbar. Die ist besonders bei Kleinfahrzeugen vorteilhaft, wo ohnehin die Türausschnitte relativ eng sind.

Zweckmäßig wird eine Wegverlagerung von Türsäulenverkleidungsteilen mit einer Bewegung einer zugeordneten Fahrzeugtür in ihre Offenstellung gekoppelt. Durch die Öffnungsbewegung der Fahrzeugtür werden dazu unmittelbar mechanisch oder mittelbar wirkende Betätigungselemente für eine Wegverlagerung aktiviert.

Ein besonders einfach und kostengünstig herstellbares Verkleidungsteil mit einfach beherrschbarer Verlagerungsfunktion wird erreicht, wenn wenigstens ein Bereich des Verkleidungsteils als flexibles Hohlteil mit einem komprimierbaren Hohlraum ausgebildet ist.

Ein solches Hohlteil kann schlauchförmig ausgebildet sein und sich über die gesamte oder einen Teil der Säulenlänge erstrecken. Durch ein gesteuertes Aufbringen eines Unterdrucks, bevorzugt durch eine Ansteuerung eines Unterdruckgebers in Verbindung mit einer Türöffnung ist dann das Hohlteil aus einer großvolumigen Normalstellung in eine komprimierte Ausstiegstellung überführbar, wobei sich der Hohlraum durch den darin aufgebrachten Unterdruck verkleinert hat.

Je nach Ausführung des flexiblen Hohlteils kann es erforderlich sein, dieses durch einen gesteuert aufbringbaren Überdruck wieder in seine großvolumige Normalstellung zu überführen, wobei die Ansteuerung eines Überdruckgebers zweckmäßig durch die Schließbewegung oder in der Geschlossenstellung einer zugeordneten Fahrzeugtür ausgeführt wird.

Bevorzugt wird jedoch ein Hohlteil mit größerer, innerer Spannung und Elastizität verwendet, das sich bei einer Wegnahme des Unterdrucks in die großvolumige Normalstellung selbst zurückstellt.

Bei einer solchen selbstrückstellenden Ausführung eines Hohlteils kann vorteilhaft auch eine Zugfadenanordnung zur Volumenverkleinerung verwendet werden. Dazu sind an der zu der Säule hin verlagerbaren, elastischen Hohlteilwand im Hohlraum ein oder mehrere Zugfäden mit Zugrichtung auf die Säule angebracht. Wenn an diesen Zugfäden gezogen wird, bewegt sich die angeschlossene Hohlteilwand auf die Säule zu und legt sich dort verbunden mit einer Volumenverkleinerung des Verkleidungsteils an die Säule an. Eine Zugsteuerung wird zweckmäßig mit der Türstellung gekoppelt, wobei hier vorteilhaft eine unmittelbare Zuganbindung an die schwenkbare Tür möglich ist.

Für eine Verbesserung der Ein- und Ausstiegsituation reicht es oft aus, nur einen Seitenkantenbereich des Verkleidungsteils verlagerbar auszuführen. Beispielsweise kann die Ausstiegsituation eines Fondpassagiers deutlich verbessert werden, wenn an einem Verkleidungsteil an der B-Säule wenigstens ein unterer Bereich einer hinteren Seitenkante des Verkleidungsteils mit einer der vorstehenden Maßnahmen verlagert wird. In der Normalstellung kann dann dieser verlagerbare Bereich so dimensioniert sein, daß er ohne Spalt zwischen der B-Säulenverkleidung und einer angrenzenden Türverkleidung anschließt.
Anhand einer Zeichnung wird die Erfindung näher erläutert.

Es zeigen:
- Fig. 1: eine schematische Darstellung eines Kraftfahrzeugs,
- Fig. 2: einen Schnitt durch eine Säulenverkleidung gemäß dem Stand der Technik, und
- Fig. 3: einen Schnitt durch eine erfindungsgemäße Säulenverkleidung entsprechend der Linie A-A der Fig. 1.

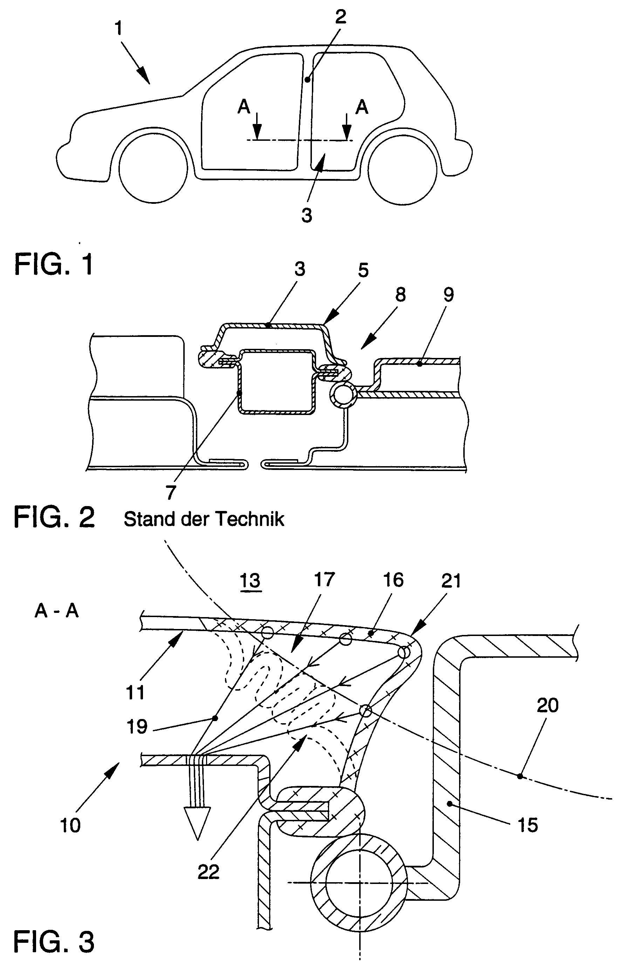

In der Fig. 1 ist eine schematische Darstellung eines Kraftfahrzeugs 1 als Kompaktfahrzeug gezeigt, das eine B-Säule 2 und eine sich auf der rechten Seite in der Bildebene der Fig. 1 an die B-Säule 2 anschließende Einstiegs- und Ausstiegsöffnung 3 aufweist. In der Fig. 3 ist ein Schnitt durch eine erfindungsgemäße Säulenverkleidung 10 entlang der Linie A-A der Fig. 1 dargestellt, während in der Fig. 2 ein Schnitt durch eine Säulenverkleidung 6 des Stands der Technik dargestellt ist.

Da eine Säulenverkleidung allgemein die Einstiegs- und Ausstiegsöffnungen eines Fahrzeugs, insbesondere eines Kompaktfahrzeugs begrenzt und dadurch die Fußbewegungsfreiheit beim Ein- und Aussteigen eines Insassen in bzw. aus dem Fahrzeug behindert werden kann, ist gemäß dem in der Fig. 2 dargestellten Stand der Technik vorgeschlagen, für einen vergrößerten Fußfreiraum beim Ein- und Aussteigen eine Verkleidungsteilkante 5 der Säulenverkleidung 6 einer B-Säule 7 weiter nach vorne zu versetzten. Dadurch ergeben sich allerdings optisch ungünstige, relativ breite Innenraumspalte 8 zwischen der Säulenverkleidung 6 und einer angrenzenden Türverkleidung 9.

Mit der in der Fig. 3 dargestellten erfindungsgemäßen Säulenverkleidung 10 wird eine mögliche Behinderung des Ausstiegs eines Insassen reduziert und gleichzeitig ein unansehlicher Innenraumspalt vermieden. Diese in der Fig. 3 dargestellte Säulenverkleidung 10 umfaßt ein Verkleidungsteil 11, das die ortsfeste B-Säule 2 im Fahrzeuginnenraum 13 umschließt. Dieses Verkleidungsteil 11 befindet sich in der in der Fig. 3 mit durchgezogenen Linien gezeichneten Position in einer Normalstellung 21.

Wie dies der Fig. 3 weiter zu entnehmen ist, schließt sich unmittelbar an das sich in ihrer Normalstellung 21 befindliche Verkleidungsteil 11 eine Türverkleidung 15 an, so daß kein optisch ungünstiger, breiter Innenraumspalt zwischen dem Verkleidungsteil 11 der Säulenverkleidung 10 und der Türverkleidung 15 ausgebildet wird.

Das Verkleidungsteil 11 weist wenigstens in einem unteren und in der Bildebene der Fig. 3 hinteren Seitenkantenbereich eine flexible Hohlteilwand 16 auf, die aus elastischem Material besteht und dort einen Hohlraum 17 umschließt.

An dieser die Seitenkante des Verkleidungsteils 11 bildenden elastischen Hohlteilwand 16 sind im Hohlraum 17 mehrere Zugfäden 19 mit Zugrichtung auf die B-Säule 2 angebracht. Wenn an diesen Zugfäden 19 entsprechend der in der Fig. 3 dargestellten Pfeilrichtung gezogen wird, verlagert sich die elastische Hohlteilwand 16 mit einer Volumenverkleinerung in Richtung auf die B-Säule 2 zu in eine in der Fig. 3 strichliert eingezeichnete Ausstiegstellung 22. Damit ist die Ein- und Ausstiegsituation eines Fondpassagiers im Fußbereich deutlich verbessert, wie dies aus der in der Fig. 3 dargestellten strichpunktierten Bewegungslinie 20 des Ausstiegfußes ersichtlich ist.

Die Zugfäden 19 sind mit ihrem anderen Ende bevorzugt mit der jeweiligen zu öffnenden Fahrzeugtür verbunden, was hier jedoch nicht dargestellt ist, so daß bei einem Öffnen dieser Fahrzeugtür ein Zug auf die Zugfäden 19 ausgeübt und die elastische Hohlteilwand 16 in die Ausstiegstellung 22 verlagert wird. Nach dem Schließen der Fahrzeugtür wirkt keine Zugkraft mehr auf die Zugfäden 19, so daß sich die elastische Hohlteilwand 16 aufgrund ihrer inneren Elastizität von selbst von der Ausstiegstellung 22 in die Normalstellung 21 zurückverlagert.

Alternativ zu einer mittels Zugfäden 19 komprimierbaren elastischen Hohlteilwand 16 kann, sobald eine Fahrzeugtür geöffnet wird, zur Wegverlagerung der elastischen Hohlteilwand 16 aus der Normalstellung 21 in die komprimierte Ausstiegstellung 22 auf diese auch ein Unterdruck gesteuert aufgebracht werden. Entsprechend kann beim Schließen der Fahrzeugtür zur Rückstellung der elastischen Hohlteilwand 16 in die Normalstellung 21 ein Überdruck gesteuert aufgebracht werden.

## Patentansprüche

1. Säulenverkleidung im Innenraum eines Kraftfahrzeugs,
mit einem Verkleidungsteil, das eine ortsfeste Säule zumindest teilweise umschließt,
dadurch gekennzeichnet,
daß wenigstens ein Bereich des Verkleidungsteils (11), der in Normalstellung (21) einen Ausstieg eines Insassen behindern kann, gegenüber der ortsfesten Säule (2) beweglich ist und aus dem Behinderungsbereich in eine Ausstiegstellung (22) wegverlagerbar ist.

2. Säulenverkleidung nach Anspruch 1, dadurch gekennzeichnet, daß die Säule (2) eine Türsäule ist und die Wegverlagerung des Verkleidungsteils (11) an eine zugeordnete Fahrzeugtür gekoppelt ist, dergestalt, daß beim Öffnen der Fahrzeugtür unmittelbar oder mittelbar wirkende Betätigungselemente (19) für eine Wegverlagerung aktivierbar sind.

3. Säulenverkleidung nach Anspruch 1 oder Anspruch 2, dadurch gekennzeichnet, daß wenigstens ein Bereich des Verkleidungsteils (11) als flexibles Hohlteil mit einem Hohlraum (17) ausgebildet ist, das für eine Wegverlagerung unter Verkleinerung seines Hohlraums (17) komprimierbar ist.

4. Säulenverkleidung nach Anspruch 3, dadurch gekennzeichnet, daß das Hohlteil (11) schlauchförmig ausgebildet ist und durch einen gesteuert aufbringbaren Unterdruck aus einer Normalstellung (21) mit großem Hohlraum (17) in eine komprimierte Ausstiegstellung (22) überführbar ist.

5. Säulenverkleidung nach Anspruch 3 oder Anspruch 4, dadurch gekennzeichnet, daß das Hohlteil (11) durch einen gesteuert aufbringbaren Überdruck aus der komprimierten Ausstiegstellung (22) in die Normalstellung (21) mit großem Hohlraum (17) überführbar ist.

6. Säulenverkleidung nach einem der Ansprüche 3 bis 5, dadurch gekennzeichnet, daß das Hohlteil (11) aufgrund innerer Elastizität von der Ausstiegstellung (22) in die Normalstellung (21) selbstrückstellend ist.

7. Säulenverkleidung nach einem der Ansprüche 1 bis 3, dadurch gekennzeichnet, daß
- das Hohlteil (11) aufgrund innerer Elastizität von der Ausstiegstellung (22) in die Normalstellung (21) selbstrückstellend ist, und
- an der zu der Säule (2) hinverlagerbaren elastischen Hohlteilwand (16) im Hohlraum (17) ein oder mehrere Zugfäden (19) mit Zugrichtung auf die Säule (2) angebracht sind, die durch einen gesteuert aufbringbaren Zug, bevorzugt durch eine Zugverbindung zu einer angrenzenden Fahrzeugtür, die Hohlteilwand (16) aus einer Normalstellung (21) in eine komprimierte Ausstiegstellung (22) überführen.

8. Säulenverkleidung nach einem der Ansprüche 1 bis 7, dadurch gekennzeichnet, daß als verlagerbarer Bereich des Verkleidungsteils (11) wenigstens ein Teil einer Seitenkante (16) des Verkleidungsteils (11) ausgebildet ist.

9. Säulenverkleidung nach Anspruch 8, dadurch gekennzeichnet, daß an einem Verkleidungsteil (11) an einer B-Säule (2) wenigstens ein unterer Bereich einer hinteren Seitenkante (16) zur Vergrößerung der Ausstiegsöffnung für die Füße eines Fondinsassen verlagerbar ist.

10. Säulenverkleidung nach Anspruch 8, dadurch gekennzeichnet, daß der verlagerbare Bereich in der Normalstellung (21) ohne Spalt an eine angrenzende Türverkleidung (15) anschließt.
